# EUROPÄISCHE PATENTSCHRIFT

(11) **EP 1 780 355 B1**
(45) Veröffentlichungstag und Bekanntmachung des Hinweises auf die Patenterteilung: **16.02.2011**
(21) Anmeldenummer: 06021303.0
(22) Anmeldetag: 11.10.2006
(51) Int. Cl.: E05B 65/19, E05B 1/00, E05B 53/00

(54) **Betätigungsvorrichtung für die Haube eines Kraftfahrzeuges**
Actuation device for the hood of a motor vehicle
Dispositif d'actionnement d'un capot d'un véhicule automobile

(30) Priorität: 21.10.2005 DE 102005050901
(43) Veröffentlichungstag der Anmeldung: 02.05.2007
(73) Patentinhaber: AUDI AKTIENGESELLSCHAFT, 85045 Ingolstadt (DE)
(72) Erfinder: Schuh, Armin, 74189 Weinsberg (DE)
(74) Vertreter: Patzelt, Heike Anna Maria

(56) Entgegenhaltungen:
- DE-A1- 3 807 987
- DE-A1- 10 341 832
- DE-B4- 10 105 541
- US-A- 4 872 366
- CROWE W R: "RETAINING PLASTIC PARTS WITHIN THEMSELVES." IBM TECHNICAL DISCLOSURE BULLETIN 1983 JUN, Bd. 26, Nr. 1, Juni 1983 (1983-06), Seite 291, XP001600655

## Beschreibung

Die Erfindung bezieht sich auf eine Betätigungsvorrichtung für eine Haube eines Kraftfahrzeuges gemäß dem Oberbegriff des Patentanspruchs 1.

Aus der DE 101 05 541 B4 ist eine Betätigungsvorrichtung für eine Haube eines Kraftfahrzeuges bekannt, die einen von außen zugänglichen Entriegelungshebel aufweist, an dem ein Verriegelungstaster ausgebildet ist. Der Verriegelungstaster ist hier schwenkbar ausgebildet und über ein Federmittel in der Verriegelungsstellung für die Haube gehalten. Dem Verriegelungstaster steht ein Rastelement gegenüber, das mit dem Verriegelungstaster in einer Betätigungsstellung in Eingriff bringbar ist. Von außerhalb des Fahrzeugs, kann zwar der Entriegelungshebel verschwenkt werden, aber der Verriegelungstaster ist von außen nicht ohne weiteres in Eingriff mit dem Rastelement bringbar; denn dieser weist am freien Ende eine Nase auf, die in der Betätigungsstellung in eine Rastausnehmung eingreift und eine starre Verbindung zwischen dem Handgriff und dem Umlenkarm zum Bowdenzug herstellt. Hierdurch ist eine widerrechtliche Betätigung des Handgriffs zum Öffnen der Haube von außen verhindert.

Nachteilig bei einer solchen Betätigungsvorrichtung ist es, dass der Entriegelungshebel einfach und schnell demontiert werden kann und dann der Umlenkarm mit dem Bowdenzug zugänglich ist.

Die DE 103 41 832 A1 zeigt eine Betätigungseinrichtung, insbesondere zum Entriegeln eines schwenkbaren Deckels eines Kraftfahrzeuges, mit einem Betätigungselement, dessen Betätigungsabschnitt eine von einer Verkleidung umgebene Sichtfläche umfasst. Der Betätigungsabschnitt ist einem ersten Betätigungsteil des Betätigungselementes zugeordnet, wobei der erste Betätigungsteil an einem weiteren Betätigungsteil des Betätigungselementes befestigbar ist. Ein Drehlager, über das der weitere Betätigungsteil mit einer Befestigungsplatte verbunden ist, wird über eine Clipverbindung gesichert. Die Betätigungseinrichtung ist vorzugsweise im Fahrzeuginnenraum anzuordnen, so dass keine besonderen Vorkehrungen zur Verhinderung einer Demontage durch Unbefugte, insbesondere zum Lösen der Clipverbindung, getroffen wurden.

Aufgabe der Erfindung ist es, eine Betätigungsvorrichtung aufzuzeigen, bei dem die Demontage des Entriegelungshebels nur dann möglich ist, wenn die Haube geöffnet ist.

Diese **Aufgabe** wird dadurch **gelöst**, dass der Entriegelungshebel einen Zapfen aufweist, der die Drehachse ausbildet. Der Zapfen befindet sich in einer Führungsöffnung im Lagerbock und wird von einer Rastnase am Lagerbock drehbar gehalten. Hierfür weist der Zapfen eine kreisbogenförmige Nut auf, in dem die Rastnase den Zapfen während der Drehung festhält. Die Nut ist jedoch nicht ganz umlaufend am Zapfen angeordnet, sonder nur partiell, sodass wenn die Rastnase aus der Nut herausgedreht wird, der Zapfen aus der Führungsöffnung herausgezogen werden kann. Die Länge der Nut am Zapfen ist abhängig von der Strecke die ein Umlenkarm mit dem Bowdenzug benötigt, um das Haubenschloss zu öffnen. Hierbei ist der Umlenkarm mit dem Entriegelungshebel gekoppelt. Sobald die Haube geöffnet ist, kann der Bowdenzug im Innern der Haube gelöst werden und dann der Umlenkarm und somit auch der Entriegelungshebel mit dem Zapfen solange weitergedreht werden bis die Rastnase des Lagerbocks aus der Nut geführt wird. Wenn die Rastnase aus der Nut des Zapfens gedrückt wird, kann der Entriegelungshebel entfernt werden.

**Der Vorteil** bei einem solchen Entriegelungshebel besteht darin, dass der Entriegelungshebel erst dann ausgebaut werden kann, wenn die Motorhaube bereits geöffnet ist. Dadurch ist eine einfache und diebstahlsichere Montage und Demontage des Entriegelungshebels gewährleistet. Ein weiterer Vorteil besteht darin, dass weniger Bauteile benötigt werden und dass sich das Design durch den einstückigen Entriegelungshebel verbessert. Ferner ist selbst bei einem gewaltsamen Versuch den Entriegelungshebel zu entfernen der Diebstahlschutz gewährleistet, weil dann der Zapfen im Lagerbock stecken bleibt und den Zugang zum Umlenkarm mit dem Bowdenzug versperrt.

**Weitere Vorteile und vorteilhafte Weiterbildungen** ergeben sich aus den Unteransprüchen. Hierbei weist der Entriegelungshebel eine Lasche auf, die sich an der Karosserie oder an einem Verkleidungsteil drehbar abstützt, und die auf den Entriegelungshebel wirkenden Kräfte auf eine größere Fläche verteilt.

Die Erfindung soll anhand von Ausführungsbeispielen, die in den Figuren 1 bis 6 dargestellt sind, näher erläutert werden. Es zeigen:
- **Figur 1:**: Fahrzeuginnenraum im Bereich des Entriegelungshebels.
- **Figur 2:**: Explosionszeichnung im Bereich des Entriegelungshebels mit Verkleidung.
- **Figur 3:**: Erste Schnittdarstellung durch die Drehachse.
- **Figur 4:**: Zweite Schnittdarstellung durch die Drehachse.
- **Figur 5:**: Betätigungsvorrichtung mit noch nicht montiertem Entriegelungshebel.
- **Figur 6:**: Detailzeichnung Zapfen mit Rastnase.

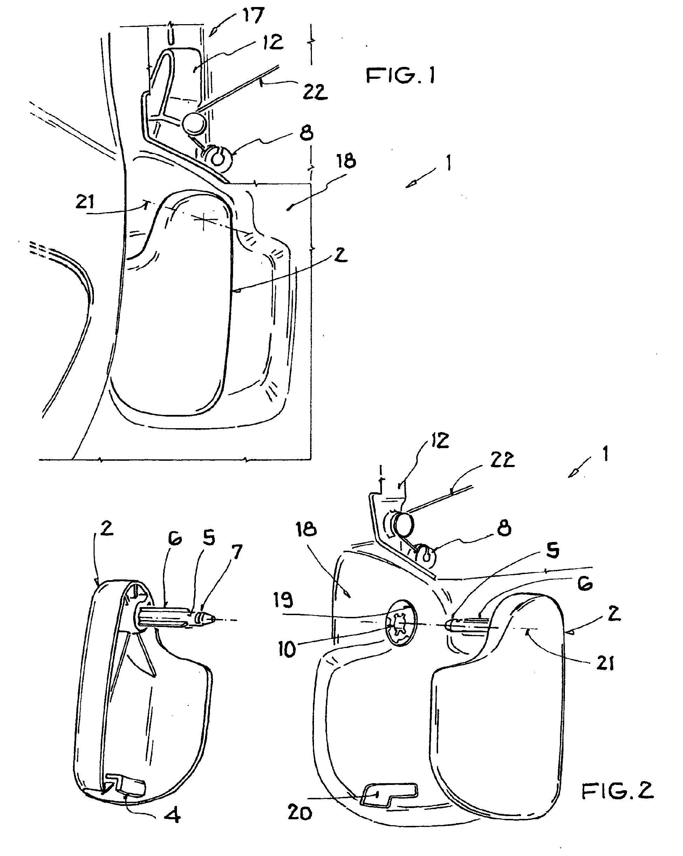

**Figur 1** zeigt den Fahrzeuginnenraum im Bereich des Entriegelungshebels. In diesem Ausführungsbeispiel dient der Entriegelungshebel **2** dazu das Haubenschloss für die Motorhaube über einen Bowdenzug **22** zu öffnen. Dazu wird der vom Fahrgastraum zugängliche Entriegelungshebel **2** um die Drehachse **21** gedreht. Dadurch wird ein hinter der Verkleidung **18** liegender Umlenkarm **8,** an dem der Bowdenzug **22** befestigt ist, mitgedreht und damit über den Bowdenzug eine Kraft übertragen, die bewirkt, dass sich das Haubenschloss öffnet und der Motorraum zugänglich wird. Der Entriegelungshebel **2** ist zusammen mit dem Umlenkarm **8** an einem Lagerbock **12** drehbar befestigt. Der Lagerbock **12** wiederum ist an der Karosserie **17,** insbesondere der A-Säule angeschraubt.

**Figur 2** zeigt eine Explosionszeichnung im Bereich des Entriegelungshebels mit der Verkleidung. Hierbei weist der Entriegelungshebel **2** einen Zapfen **5** auf, der die Drehachse **21** ausbildet. Am Zapfen **5** sind Längsrippen **6** angeordnet, die ein Getriebe zum Umlenkarm **8** ausbilden, so dass beim Drehen des Entriegelungshebels **2** auch der Umlenkarm **8** mitgedreht und der Bowdenzug **22** bewegt werden kann. In der Verkleidung **18** ist hierfür ein erste Wandöffnung **19** vorgesehen, durch die der Zapfen **5** in den am Lagerbock **12** befestigten Umlenkarm **8** eingeführt werden kann. Auf der Rückseite des Entriegelungshebel **2** befindet sich eine Lasche **4.** Diese Lasche **4** wird bei der Montage des Entriegelungshebels **2** in eine zweite Wandöffnung **20** der Verkleidung **18** eingebracht. Diese zusätzliche Führung **4, 20** bestehend aus der Lasche **4** und der zweiter Wandöffnung **20** dient einerseits dazu, dass die auf den Entriegelungshebel **2** einwirkenden Kräfte auf eine größere Fläche verteilt werden, weil eine zusätzliche Führung ausgebildet ist und der Entriegelungshebel **2** nicht so schnell, insbesondere im Bereich des Zapfens **5** abgerissen werden kann, wodurch auch die Diebstahlsicherheit erhöht wird. Ferner ist in dieser Explosionszeichnung das Innere des Umlenkarms **8** zu sehen. Auch hier sind Längsrippen **10** ausgebildet die zusammen mit den Längsrippen **6** des Zapfens **5** eine Verzahnung bzw. ein Getriebe ausbilden, so dass bei einer Drehung des Entriegelungshebels **2** auch der Umlenkarm **8** bewegt wird. Durch diese Bewegung wird auch die Lage der Bowdenzughalterung **9** verändert und damit der Bowdenzug **22** betätigt. Gleichfalls ist in dieser Figur die nicht ganz umlaufende Nut **7** am Ende des Zapfens **5** ersichtlich, mit der später eine lösbare Rastverbindung mit dem Lagerbock **12** ausbildet.

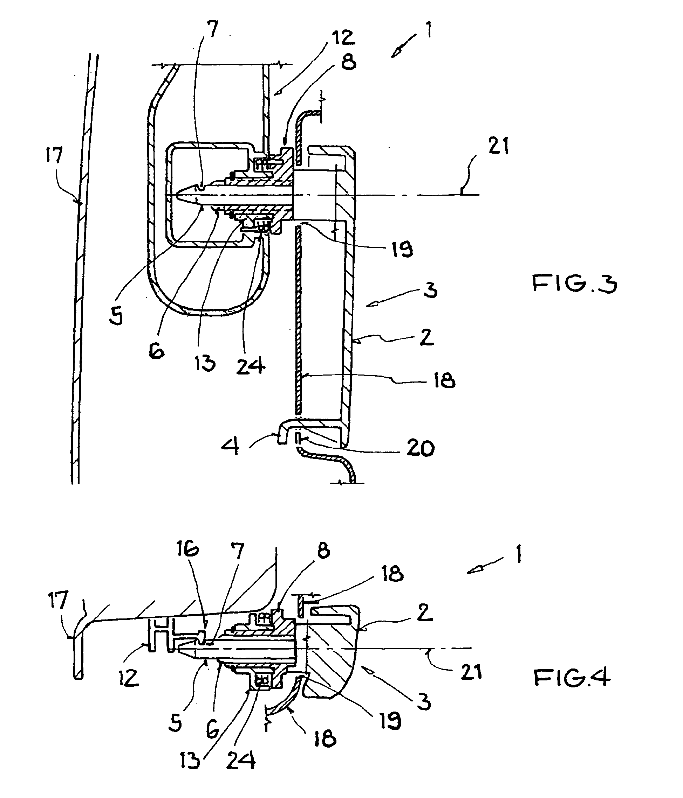

**Figur 3** und **Figur 4** zeigen Schnittdarstellungen durch die Drehachse **21.** Außen vor der Verkleidung **18** der A-Säule **17** ist der Griff des Entriegelungshebels **2** angeordnet. Der Entriegelungshebel **2** ragt durch durch zwei Wandöffnung **19, 20** hindurch. Die erste Wandöffnung **19** an der Verkleidung **18** der A-Säule **17** dient dazu, einen Durchgang für den Zapfen **5** zu stellen, um diesen mit dem Umlenkarm **8** und dem Lagerbock **12** zu verbinden. In der zweite Wandöffnung **20** befindet sich eine Lasche **4** des Entriegelungshebels **2,** wobei die zweite Wandöffnung **20** und die Lasche **4** als Führungs- und zusätzliche Befestigungsvorrichtung für den Entriegelungshebel **2** dienen.
Der Zapfen **5** des Entriegelungshebel **2** wird in die Öffnung des Umlenkarms **8** eingeführt. Hier bilden Entriegelungshebel **2** und Umlenkarm **8** eine Verzahnung **11** aus, so dass bei einer Drehung des Zapfens **5** um seine Drehachse **21** auch der Umlenkarm **8** in Drehung versetzt wird. Der Umlenkarm **8** wiederum ist in einer Öffnung des Lagerbocks **12** drehbar gelagert. Um den Entriegelungshebel und den Umlenkarm nach Betätigung des Haubenschlosses wieder in die Ausgangslage zurückzuführen ist in der Betätigungsvorrichtung **1** eine Rückstellfeder **24** angeordnet.
Der Zapfen **5** des Entriegelungshebels weist zur dreh- und lösbaren Befestigung am Lagerbock **12** eine Nut **7** auf, die die Form eines offenen Kreisbogens darstellt und die ein Teil der Rastverbindung **16** zwischen Entriegelungshebel und Lagerbock **12** darstellt. Der andere Teil der Rastverbindung **16,** der die Form einer Rastnase **14** hat, ist am Lagerbock **12** ausgebildet und in Figur 4 dargestellt. Diese Rastnase **14,** die bei einer montierten, betriebsbereiten Betätigungsvorrichtung **1** in die Nut **7** des Zapfens **5** eingreift, verhindert, dass der Entriegelungshebel **2** aus dem Lagerbock **12** entfernt werden kann. Bei einer Drehung jedoch läuft die Rastnase **14** in der kreisbogenförmigen Nut **7** und bildet demzufolge eine drehbare Befestigung des Entriegelungshebels **2** mitsamt dem Umlenkarm **8** mit dem Lagerbock **12** aus.
Um den Eritriegelungshebel **2** zu demontieren wird dieser solange gedreht bis die Rastnase **14** des Lagerbocks **12** an das Ende der Nut **7** gelangt ist und dann durch den Absatz zwischen Nut **7** und Mantelfläche des Zapfens **5** aus der Ebene der Nut **7** herausgedrückt wird. Dadurch wird die drehbare Rastverbindung **16** gelöst und die Rastverbindung **16** geöffnet. Jetzt kann der Entriegelungshebel **2** aus dem Lagerbock **12** und aus dem Umlenkarm **8** herausgezogen werden. Bei einer solchen Demontage erweist es sich als vorteilhaft, wenn zum einen die Länge des Bowdenzug so bemessen ist, dass der Umlenkarm **8** und somit auch der Entriegelungshebel **2** nur bis ans Ende der Nut **7** bewegt werden kann, so dass der Diebstahlschutz gewährleistet ist und eine versehentliche Demontage verhindert wird. Um den Entriegelungshebel **2** zu demontieren muss dann erst die Motorhaube geöffnet werden und der Bowdenzug **22** ausgehängt werden. Hierfür ist es zweckmäßig einen mehrteiligen Bowdenzug zu verwenden, der dann an einer zugänglichen Stelle unter der Haube getrennt werden kann. Ist der Bowdenzug dann nicht mehr unter Spannung, so kann der Entriegelungshebel **2** weiter gedreht und der Rastverschluss **16** gelöst werden, so dass eine Demontage ermöglicht wird.

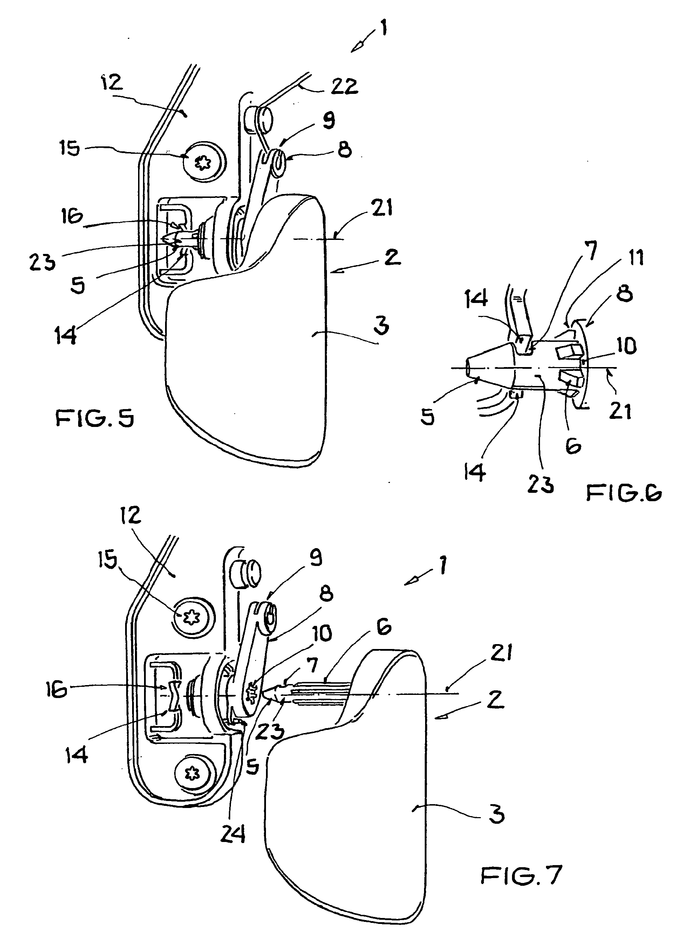

**Figur 5** zeigt die Betätigungsvorrichtung mit montiertem Entriegelungshebel **2.** Der Lagerbock **12** wird über Schrauben an der A-Säule befestigt und dient somit als Halterung für die Betätigungsvorrichtung. Am Lagerbock **12** ist mindestens eine Rastnase **14** ausgebildet. Diese Rastnase **14** kann ergänzend zum Ausführungsbeispiel eine beliebige Form aufweisen, die für eine drehbare formschlüssige Verbindung **16** zweckmäßig ist. Um die Rastnase **14** bei der Montage bzw. Demontage in die Nut **7** bzw. aus der Nut **7** des Zapfens **5** zu bewegen, muss die Rastnase **14** federnd am Lagerbock **12** ausgebildet sein.

**Figur 6** zeigt eine Detailzeichnung von Zapfen **5** und Rastnase **14.** Hier befindet sich die Rastnase **14** in der Nut **7** an der Zapfenspitze. Der Absatz zwischen der Nut **7** und der Mantelfläche **23** kann wie eine Rampe ausgebildet sein, so dass bei der Demontage des Entriegelungshebels **2** die Rastnase **14** mit geringer Kraftaufwendung über die Länge der Rampe aus der Nut **7** bewegt werden kann. Alternativ dazu kann der Übergang auch treppen- oder stufenförmig ausgestaltet sein, so dass die Rastnase **14** mit mehr Kraft aus der Nut **7** gehebelt werden muss und die Demontagestellung genauer definiert ist. Ferner ist in dieser Darstellung die Verzahnung **11** zwischen den Rippen **6, 10** des Zapfens **5** und des Umlenkarms **8** ersichtlich.

**Bezugszeichenliste:**

| | | | | |
|---|---|---|---|---|
| 1 | Betätigungsvorrichtung | | | |
| 2 | **Entriegelungshebel** | | | |
| 3 | Griff | | | |
| 4 | Lasche | | | |
| 5 | Zapfen | | | |
| 6 | Längsrippen Entriegelungshebel | | | |
| 7 | Nut | | | |
| 8 | **Umlenkarm** | | | |
| 9 | Bowdenzughalterung | | | |
| 10 | Längsrippen Umlenkarm | | | |
| 11 | Verzahnung | | | |
| 12 | **Lagerbock** | | | |
| 13 | Führungsöffnung | | | |
| 14 | Rastnase | | | |
| 15 | Schraube | | | |
| 16 | Rastverbindung | | | |
| 17 | **A-Säule** | | | |
| 18 | Verkleidung A-Säule | | | |
| 19 | 1. Wandöffnung | | | |
| 20 | 2. Wandöffnung | | | |
| 21 | Drehachse | | | |
| 22 | Bowdenzug | | | |
| 23 | Mantelfläche | | | |
| 24 | Rückstellfeder | | | |
| 25 | | | | |
| 26 | | | | |
| 27 | | | | |

## Patentansprüche

1. Betätigungsvorrichtung (1) für eine mittels eines Haubenschlosses verschließbaren und zu öffnende Haube eines Kraftfahrzeuges, wobei die Betätigungsvorrichtung
- einen von außen zugänglichen drehbaren Entriegelungshebel (2)
- einen von außen unzugänglichen, von einer Wand (18) abgedeckten Umlenkarm (8) über den das Haubenschloss betätigt wird,
- und einen Lagerbock (12) an dem der Entriegelungshebel (2) durch eine erste Wandöffnung (19) hindurch und der Umlenkarm (8) befestigt sind, aufweist, **dadurch gekennzeichnet, dass** der Lagerbock (12) und der Entriegelungshebel (2) zusammen eine drehbare Rastverbindung (16) ausbilden, die aus mindestens einer Rastnase (14) und einer Nut (7) besteht, wobei der Entriegelungshebel (2) einen Zapfen (5) aufweist auf dessen Mantelfläche (23) die Nut (7) kreisbogenförmig ausgebildet ist so dass die Rastnase (14) beim Drehen des Verriegelungshebels (2) aus der Nut (7) herausgedrückt werden kann.

2. Betätigungsvorrichtung (1) nach Patentanspruch 1, **dadurch gekennzeichnet, dass** die Rastnase (14) federnd ist, um sie in die Nut (7) oder aus der Nut (7) zu bewegen.

3. Betätigungsvorrichtung (1) nach Patentanspruch 2, **dadurch gekennzeichnet, dass** die Nut (7) ein rampenförmiges Ende aufweist.

4. Betätigungsvorrichtung (1) nach Patentanspruch 2, **dadurch gekennzeichnet, dass** die Nut (7) ein treppenförmiges Ende aufweist.

5. Betätigungsvorrichtung (1) nach einem der vorangegangenen Ansprüche, **dadurch gekennzeichnet, dass** die Wand (18) eine zweite Öffnung (20) aufweist, in die eine Lasche (4) des Entriegelungshebels (2) ragt.

## Claims

1. Actuating device (1) for a motor vehicle bonnet that can be closed and opened using a bonnet lock, whereby the actuating device has
- an externally accessible rotatable release lever (2)
- an externally inaccessible redirecting arm (8) covered by a wall (18), which arm operates the bonnet lock,
- and a bearing block (12) to which the release lever (2), through a first wall opening (19), and the redirecting arm (8) are fastened, **characterized in that** the bearing block (12) and the release lever (2) together form a rotatable latching connection (16), which consists of at least one detent (14) and a groove (7), whereby the release lever (2) has a pin (5) on its outer surface (23) and the groove (7) has a circular arc shape, so that the detent (14) can be pushed out of the groove (7) on rotating the locking lever (2).

2. Actuating device (1) according to claim 1, **characterized in that** the detent (14) is springy in order to move it into the groove (7) or out of the groove (7).

3. Actuating device (1) according to claim 2, **characterized in that** the groove (7) has a ramp-shaped end.

4. Actuating device (1) according to claim 2, **characterized in that** the groove (7) has a ladder-shaped end.

5. Actuating device (1) according to one of the previous claims, **characterized in that** the wall (18) has a second opening (20) into which a flap (4) of the release lever (2) projects.

## Revendications

1. Dispositif d'actionnement (1) d'un capot d'un véhicule automobile pouvant être ouvert et fermé au moyen d'une serrure de capot, dans lequel le dispositif d'actionnement comporte
- un levier de déverrouillage (2) rotatif accessible de l'extérieur
- un bras de renvoi (8) non accessible de l'extérieur et recouvert par une paroi (18) par le biais duquel la serrure de capot est actionnée,
- et un support de palier (12) sur lequel sont fixés le levier de déverrouillage (2) à travers une première ouverture de paroi (19) et le bras de renvoi (8), **caractérisé en ce que** le support de palier (12) et le levier de déverrouillage (2) forment ensemble une liaison par encliquetage (16) rotative, qui se compose d'au moins un bec d'encliquetage (14) et d'une rainure (7), le levier de déverrouillage (2) présentant un tourillon (5) sur la surface d'enveloppe (23) duquel la rainure (7) est réalisée en arc de cercle de telle sorte que le bec d'encliquetage (14) lors de la rotation du levier de verrouillage (2) peut être poussé hors de la rainure (7).

2. Dispositif d'actionnement (1) selon la revendication 1, **caractérisé en ce que** le bec d'encliquetage (14) est élastique pour le déplacer dans la rainure (7) ou hors de la rainure (7).

3. Dispositif d'actionnement (1) selon la revendication 2, **caractérisé en ce que** la rainure (7) présente une extrémité en forme de rampe.

4. Dispositif d'actionnement (1) selon la revendication 2, **caractérisé en ce que** la rainure (7) présente une extrémité en forme d'escalier.

5. Dispositif d'actionnement (1) selon l'une quelconque des revendications précédentes, **caractérisé en ce que** la paroi (18) présente une deuxième ouverture (20) dans laquelle pénètre une languette (4) du levier de déverrouillage (2).
